# EUROPEAN PATENT SPECIFICATION

(11) **EP 4 296 025 B1**
(45) Date of publication and mention of the grant of the patent: **13.08.2025**
(21) Application number: 23178466.1
(22) Date of filing: 09.06.2023
(51) Int. Cl.: B26D 1/40, B29C 51/10

(54) **A METHOD FOR TRANSVERSE CUTTING OF A WATER-SOLUBLE TAPE**
VERFAHREN ZUM QUERSCHNEIDEN EINES WASSERLÖSLICHEN BANDES
PROCÉDÉ DE COUPE TRANSVERSALE D'UNE BANDE SOLUBLE DANS L'EAU

(30) Priority: 22.06.2022 IT 202200013189
(43) Date of publication of application: 27.12.2023
(73) Proprietor: Fameccanica.Data S.p.A., 66020 San Giovanni Teatino (CH) (IT)
(72) Inventor: CENTORAME, Oscar, 66020 San Giovanni Teatino (Chieti) (IT); D'AURIZIO, Massimiliano, 66020 San Giovanni Teatino (Chieti) (IT)
(74) Representative: Buzzi, Notaro & Antonielli d'Oulx S.p.A.

(56) References cited:
- CN-A- 105 438 558
- CN-A- 105 539 902
- US-A1- 2009 321 021
- US-A1- 2017 101 204
- US-B2- 11 124 326

## Description

### Field of the invention

The present invention relates to the production of single-dose capsules, for example, single-dose capsules containing home-care compositions, such as laundry detergents, dishwasher detergents, fabric softeners and other compositions used in household appliances.

More precisely, the invention relates to a method for transverse cutting of a water-soluble tape.

### Background of the invention

Single-dose capsules are water-soluble sachets containing laundry or dishwasher detergents, fabric softeners or other products for household appliances. Single-dose capsules are becoming increasingly popular due to the ease of use for the user. Single-dose detergent capsules also have a positive impact on sustainability as they contain the precise dose of detergent for one load and are a way to reduce waste.

Single-dose capsules are generally produced by forming recesses in a first water-soluble film, filling the recesses with fluid or powder compositions, applying a second water-soluble film over the first water-soluble film, and binding the first and second water-soluble films together to seal the compositions between the two water-soluble films.

Machines for producing single-dose capsules generally form a water-soluble tape movable in a machine direction, comprising a plurality of single-dose capsules joined together by flat areas in which the first and second water-soluble films are joined in contact with each other. In the water-soluble tape, the single-dose capsules are arranged in a plurality of transverse rows and in a plurality of longitudinal rows. The water-soluble tape is then cut transversely and in a longitudinal direction along the flat areas to form individual single-dose capsules.

US11124326B2 discloses a method for cutting a water-soluble tape in the transverse direction, said tape being formed by transverse and longitudinal rows of single-dose capsules joined together. The transverse cut is carried out by a cutting unit comprising an anvil and a knife roller rotating around respective parallel axes. The water-soluble tape moves in a machine direction at a speed V1, and is passed between the anvil and the knife roller. Advantageously, the speed V1 may be constant.

The knife roller comprises one or more blades and rotates at a variable speed. When cutting the water-soluble tape, the knife roller blades move at the same speed as the water-soluble tape.

The cutting of the water-soluble film by means of a knife roller equipped with blades that act on an anvil requires mechanical interference between the blades and the anvil. The interference value necessary for the system to be able to cut the water-soluble film depends on many factors, linked both to the properties of the material to be cut and to the cutting technology used. The interference between the blades and the anvil generates mechanical stresses, so that it would be desirable to reduce the degree of interference as much as possible, without however affecting the ability to effectively make the cut.

The cutting units, to reduce to a minimum the interference values, must be made with particular constructive attention in terms of precision and stiffness. A high construction accuracy may reduce but hardly eliminate alignment errors, concentricity, or defects of the knife blades, which require greater interference and cutting forces to be compensated for.

### Object and summary of the invention

The object of the present invention is to provide a method for transverse cutting of a water-soluble tape that overcomes the problems of the prior art.

According to the present invention, this object is achieved by a method having the characteristics of claim 1.

Optional characteristics of the invention form the subject of the dependent claims.

The claims form an integral part of the disclosure provided here in relation to the invention.

### Brief description of the drawings

Further characteristics and advantages of the invention will become clear from the detailed description that follows, given purely by way of nonlimiting example, with reference to the attached drawings, in which:
- Figure 1 is a schematic view of a machine for producing single-dose capsules,
- Figure 2 is a schematic perspective view showing a water-soluble tape,
- Figure 3 is a schematic view of a transverse cutting unit indicated by the arrow III in Figure 1,
- Figure 4 is a schematic view on an enlarged scale of the detail indicated by the arrow IV in Figure 3,
- Figures 5 and 6 are graphs showing the variation of the peripheral speed of two embodiments of the knife roller during a complete rotation.

It will be appreciated that the accompanying drawings are schematic and that some components may not be for a better understanding of the figures. It will be appreciated that the various figures may also not be represented on the same scale.

### Detailed description

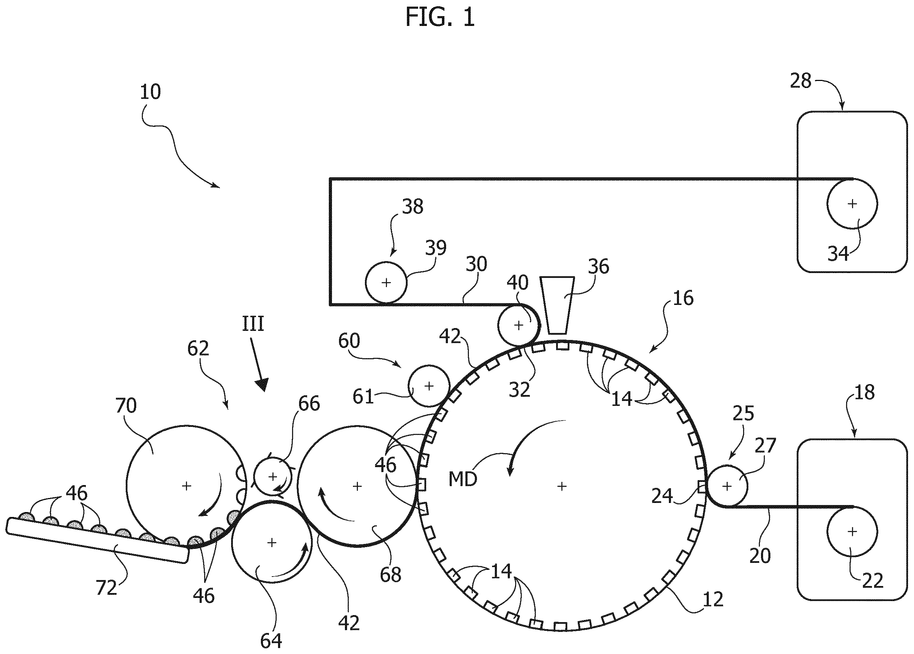

With reference to Figure 1, a machine for producing single-dose capsules is indicated by the reference number 10.

The machine 10 comprises a forming surface 12 having a plurality of cavities 14, continuously movable in a machine direction MD. In the embodiment shown in Figure 1, the forming surface 12 is the outer cylindrical surface of a wheel 16 rotating about a horizontal axis A. In a possible embodiment, the forming surface 12 may be the outer surface of a closed-loop belt.

The machine 10 comprises a first feeding unit 18 configured to feed a first continuous water-soluble film 20 onto the forming surface 12. The first continuous water-soluble film 20 is unwound from a first reel 22 and is fed to the forming surface 12 at a first position 24.

The machine 10 may comprise a heating device 25 arranged to heat the first continuous water-soluble film 20 upstream of the forming surface 12. The heating device 25 may comprise a heated roller 27, which is in contact with the first continuous water-soluble film 20 upstream of the first position 24.

The first continuous water-soluble film 20 is retained on the forming surface 12 while moving in the machine direction MD. The first continuous water-soluble film 20 may be retained on the forming surface 12 by mechanical retaining elements, which act on the lateral edges of the first continuous water-soluble film 20, for example, by belts which hold the lateral edges of the first continuous water-soluble film 20 on the outer surface of the wheel 16.

The first continuous water-soluble film 20 deforms in the cavities 14 of the forming surface 12 while moving in the machine direction MD. The deformation of the first continuous water-soluble film 20 at the cavities 14 may be obtained by a suction system comprising a plurality of holes opened on the surfaces of the cavities 14 and fluidly connected to a stationary suction chamber connected to a subatmospheric pressure source. The first continuous water-soluble film 20 is kept adherent to the walls of the cavities 14 by said suction system, so that a plurality of recesses are formed in the first continuous water-soluble film 20, having the same shape as the cavities 14.

The machine 10 comprises a second feeding unit 28 configured to feed a second continuous water-soluble film 30 onto the forming surface 12 at a second position 32 located downstream of the first position 24 with respect to the machine direction MD. The second continuous water-soluble film 30 is unwound from a second reel 34.

The machine 10 comprises a dosing apparatus 36 configured to dispense metered quantities of at least one composition into the recesses of the first continuous water-soluble film 20, which are arranged at the cavities 14 of the forming surface 12. The dosing apparatus 36 is arranged in an intermediate position between the first position 24 and the second position 32. The dosing apparatus 36 fills the recesses of the first continuous water-soluble film 20 with one or more compositions. After the recesses of the first continuous water-soluble film 20 have been filled with the compositions, the second continuous water-soluble film 30 is applied onto the first continuous water-soluble film 20, so as to enclose the metered amounts of compositions contained in the recesses between the first and the second continuous water-soluble film 20, 30.

The machine 10 comprises a wetting unit 38 configured to wet a surface of the second continuous water-soluble film 30 upstream of the second position 32. The wetting unit 38 comprises a wetting roller 39 that is in contact with the surface of the second continuous water-soluble film 30, which will be placed in contact with the first continuous water-soluble film 20.

The machine 10 may comprise a pressure roller 40 configured to press the first and second continuous water-soluble films 20, 30 against the forming surface 12 in the contact areas surrounding the cavities 14 containing the metered compositions. The first and second continuous water-soluble films 20, 30 are waterbonded to each other at respective contact areas surrounding the recesses containing the metered compositions.

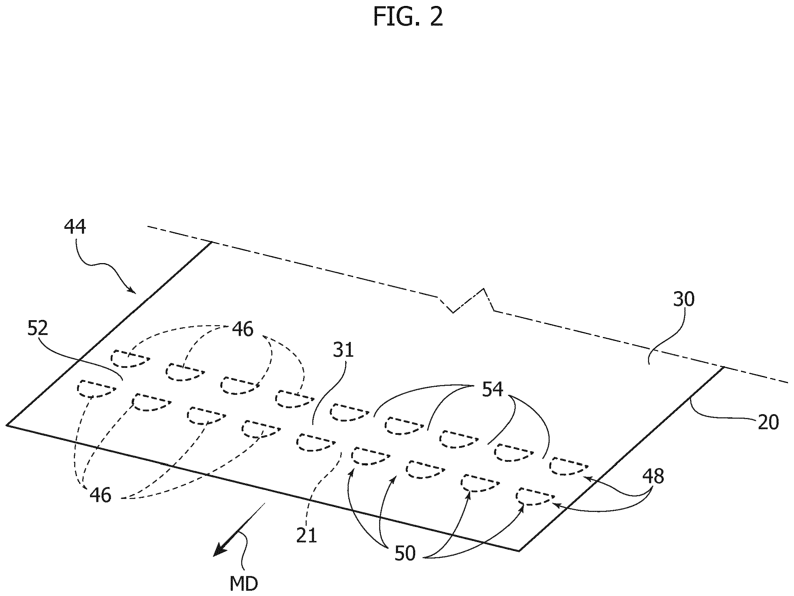

With reference to Figure 2, after the reciprocal bonding between the first and second continuous water-soluble films 20, 30, a water-soluble tape 44 is formed. Within the water-soluble tape 44, single-dose capsules 46 are formed, connected and separated from each other by flat areas 52, 54 comprising a first side 21 and a second side 31.

The single-dose capsules 46 are arranged in transverse rows 48 and longitudinal rows 50. The single-dose capsules 46 of the transverse rows 48 are joined together by transverse flat areas 52, and the single-dose capsules 46 of the longitudinal rows 50 are joined together by longitudinal flat areas 54. In the flat areas 52, 54, the first and second continuous water-soluble films 20, 30 are joined in contact with each other.

The flat areas 52, 54 may have a thickness of between 50 microns and 400 microns.

In a possible embodiment, the single-dose capsules 46 protrude outwards from the first side 21, i.e. from the side of the first water-soluble film 20.

In a possible embodiment, the single-dose capsules 46 protrude outwards from the second side 31, i.e. from the side of the second water-soluble film 30.

The machine 10 comprises a longitudinal cutting unit 60 and a transverse cutting unit 62, which cut the water-soluble tape 44 along the longitudinal flat areas 54, and along the transverse flat areas 52, so as to form individual single-dose capsules 46.

In the embodiment illustrated in Figure 1, the longitudinal cutting unit 60 is arranged upstream of the transverse cutting unit 62 with reference to the machine direction MD. In this embodiment, the longitudinal cutting unit 60 may comprise a plurality of discs 61 cooperating with the forming surface 12 and arranged to cut the water-soluble tape 44 along the longitudinal flat areas 54.

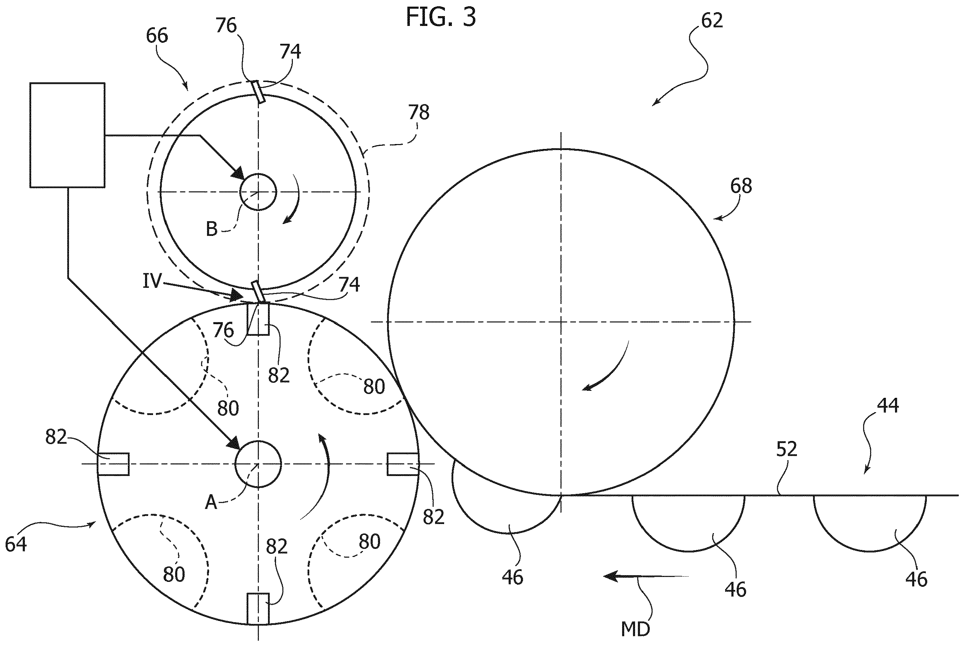

With reference to Figures 1 and 3, the transverse cutting unit 62 comprises an anvil 64 and a knife roller 66, rotating around respective rotation axes A and B, parallel to each other and perpendicular to the machine direction MD. The water-soluble tape 44 passes between the anvil 64 and the knife roller 66. The knife roller 66 cuts the water-soluble tape 44 along the transverse flat areas 52.

With reference to Figure 1, the machine 10 may comprise an inlet transfer roller 68, which transfers the water-soluble tape 44 from the forming surface 12 to the anvil 64, and an outlet transfer roller 70, which receives the individual single-doses capsules 46 from the anvil 64 and transfers them to an outlet conveyor 72.

In a possible embodiment (not shown) the longitudinal cutting unit 60 may be arranged downstream of the transverse cutting unit 62 with reference to the machine direction MD, so that the cutting of the transverse flat areas 52 is carried out before the cutting of the longitudinal flat areas 54.

With reference to Figure 3, the knife roller 66 comprises one or more knives 74 mounted on the rotating knife roller 66 and having respective cutting edges 76 movable along a circular path 78. The number of knives 74 may vary from 1 to 10 according to the dimensions of the knife roller 66. If several knives 74 are provided, the respective cutting edges 76 are spaced apart from each other in an angular direction by an equal distance.

The anvil 64 may have a plurality of seats 80 configured to receive respective single-dose capsules 46. The seats 80 may be configured to retain the single-dose capsules 46, for example, by suction. The anvil 64 may have a plurality of contrast elements 82 that cooperate with the cutting edges 76 of the knives 74 to cut the transverse flat areas 52 of the water-soluble tape 44. The contrast elements 82 are arranged between two transverse rows of seats 80 adjacent to each other.

The anvil 64 and the knife roller 66 are driven in rotation around the respective rotation axes A and B by respective electric motors 84, 86 controlled by a control unit 88.

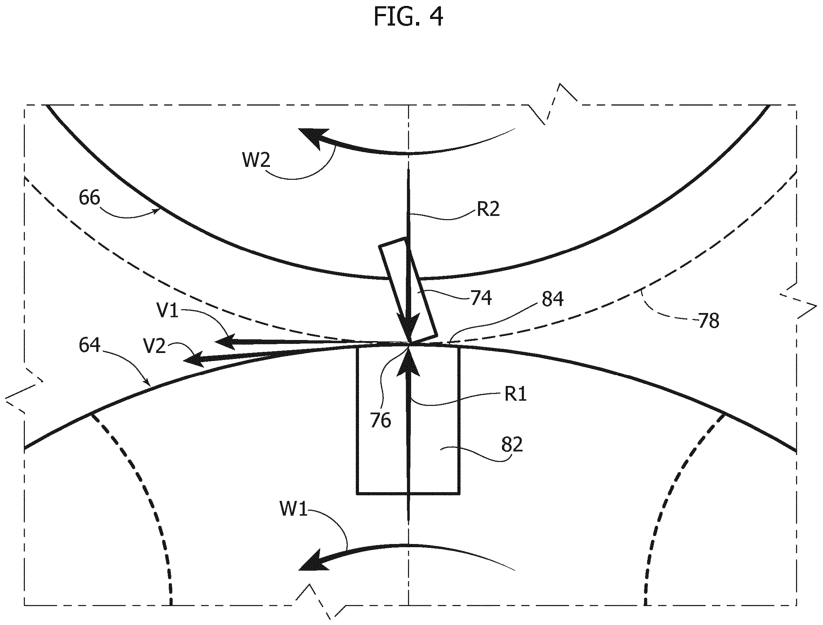

With reference to Figure 4, the control unit 88 rotates the anvil 64 with a peripheral speed V1 equal to the feed rate of the water-soluble tape 44 in the machine direction MD. The peripheral speed V1 of the anvil 64 is the linear speed of the outer surfaces 84 of the contrast elements 82, which is equal to the angular velocity W1 of the anvil 64 multiplied by the radial distance R1 between the outer surfaces 84 of the contrast elements 82 and the rotation axis A of the anvil 64.

The control unit 88 rotates the knife roller 66 with a variable peripheral speed V2 along the trajectory 78. The peripheral speed V2 of the knife roller 66 is the linear speed of the cutting edges 76 of the knives 74, which is equal to the angular speed W2 of the knife roller 66 multiplied by the radial distance R2 between the cutting edges 76 of the knives 74 and the rotation axis B of the knife roller 66.

During a single cutting cycle, the rotating knife roller 66 rotates with at least one first peripheral speed V2' and with a second peripheral speed V2".

The first peripheral speed V2' is greater than the peripheral speed V1 of the anvil 64. The second peripheral speed V2" is at least 15% faster than the first peripheral speed V2'.

The rotating knife roller 66 rotates at the speed V2' when each individual knife 74 cuts the water-soluble tape 44 in a direction transverse to the machine direction MD.

In one complete rotation of the rotating knife roller 66, a number of cutting cycles equal to the number of knives 74 on the rotating knife roller 66 are performed. Each cut of the water-soluble tape 44 is carried out only one at a time by the knives 74.

In the instants wherein the cutting edge 76 of a knife 74 comes into contact with a respective contrast element 82 of the anvil 64, the peripheral speed V2' of the knife roller 66 is greater than the peripheral speed V1 of the anvil 64.

In the instants wherein the cutting edge 76 of a knife 74 comes into contact with a respective contrast element 82 of the anvil 64, the ratio V2'/V1 is between 1.1 and 1.25. In a possible embodiment, the speed ratio V2'/V1 is between 1.1 and 1.2.

It is advantageous that the speed ratio V2'/V1 does not drop to the value 1 because - in this way - it is not necessary to slow down the knife roller 66 to the peripheral speed V1 and then accelerate it again.

It is also advantageous to avoid the speed ratio V2'/V1 from exceeding 1.25 to avoid risks of incomplete cuts, breakage of the capsules, snags in the line, and malformations of the cutting profile along the flat areas.

In a possible embodiment, the ratio between the first peripheral speed V2' and the speed V1 is between 1.1 and 1.12. In this range, there are no incomplete cuts, broken capsules, snags in the line or malformations of the cutting profile along the flat areas. Compared to the wider range, in this case, the risks of malfunctions are absent, while with the wider range malfunctions are possible, although with a very low probability (about 2%).

After having performed a cut, the peripheral speed V2 of the knife roller 66 increases to the value V2" to align the knife 74, or a subsequent knife 74, with the successive contrast element 82 in a subsequent cutting step.

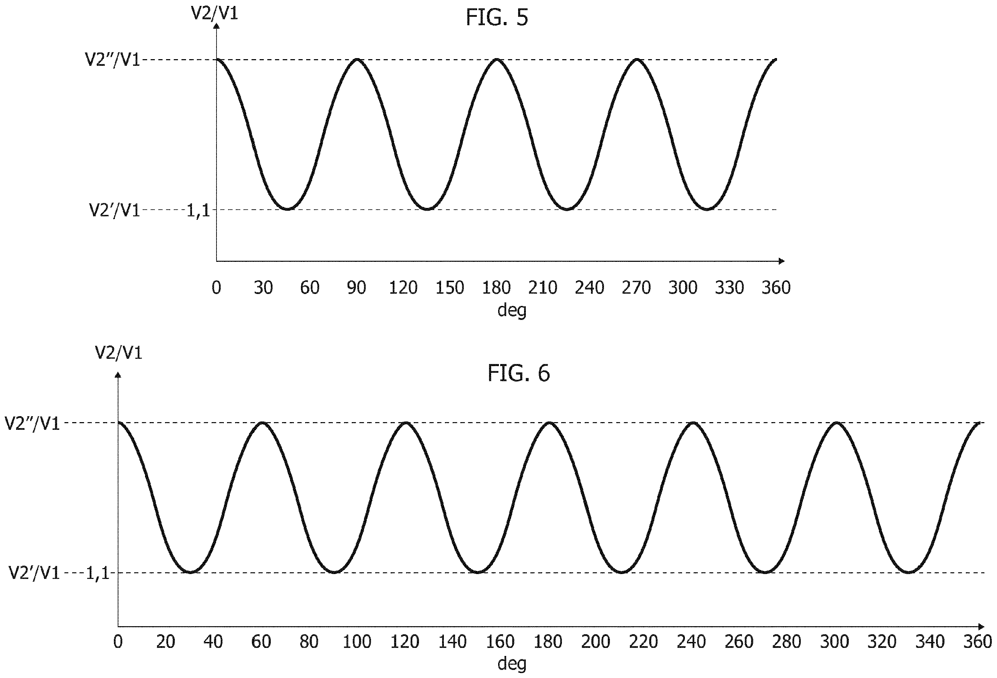

The graphs of Figures 5 and 6 show the variation of the ratio V2/V1 during a complete rotation of the knife roller 66. Figure 5 refers to a knife roller 66 having four knives 74 and Figure 6 refers to a knife roller 66 having six knives 74. The areas of the graphs wherein the V2/V1 ratio is minimum (equal to approximately 1.1) are the instants wherein the transverse cuts of the water-soluble tape 44 take place.

The difference between the peripheral speed V2' of the cutting edge 76 of the knife roller 66 and the peripheral speed of the anvil 64 during the cutting of the water-soluble tape 44 causes the point of contact between the cutting edge 76 and the anvil 64 to move between the instant of starting the cut and the instant of ending the cut. Since, during the cutting step, the peripheral speed V2' of the knife roller 66 is higher than the peripheral speed V1 of the anvil 64, the knife roller 66 disengages from the anvil 64 into a more advanced relative position than the relative position in which it was engaged. This relative displacement creates a detachment and a consequent spacing apart between the two cut edges of the first and second water-soluble films 20, 30.

The fact that during cutting a distance is formed between the cut edges of the water-soluble films 20, 30 allows reduction of the compressive force and the interference with which the cut edges 76 are pressed against the respective contrast elements 82. This leads to a consequent reduction in the stresses to which the cutting system is subjected (blades, shafts, bearings and motors).

The higher peripheral speed of the knife roller 66 with respect to that of the anvil 64, other conditions being equal, also reduces the contact time between the cutting edge 76 and the anvil 66.

Of course, the details of construction and the embodiments can be widely varied with respect to those described and illustrated, without thereby departing from the scope of the invention as defined by the claims that follow.

## Claims

1. A method for cutting a water-soluble tape (44) comprising the steps of:
- providing an anvil (64),
- providing a rotating knife roller (66) comprising at least one knife (74) having a cutting edge (76) extending outwards from said rotating knife roller (66),
- providing a water-soluble tape (44) comprising flat areas (52, 54) comprising a first side (21) and a second side (31), and single-dose capsules (46) formed inside the water-soluble tape (44), wherein the single-dose capsules (46) are connected and separated from each other by the flat areas (52, 54),
- advancing said water-soluble tape (44) in a machine direction (MD) at a speed (V1) between said anvil (64) and said rotating knife roller (66) with said first side (21) of the water-soluble tape (44) in contact with the anvil (64),
- cutting said water-soluble tape (44) with said at least one knife (74) while said water-soluble tape (44) passes between said anvil (64) and said rotating knife roller (66), wherein, during a single cutting cycle, the rotating knife roller (66) rotates with at least one first peripheral speed (V2') and a second peripheral speed (V2"), wherein the second peripheral speed (V2") is at least 15% faster than the first peripheral speed (V2') and wherein the rotating knife roller (66) rotates at the first peripheral speed (V2') when a knife (74) cuts said water-soluble tape (44) in a direction transverse to the machine direction (MD),
wherein said method is **characterized in that** the ratio between the first peripheral speed (V2') and the speed (V1) is comprised between 1.1 and 1.25.

2. The method of claim 1, wherein the ratio between the first peripheral speed (V2') and the speed (V1) is comprised between 1.1 and 1.12.

3. The method of claim 1 or claim 2, wherein said rotating knife roller (66) comprises from one to ten knives (74).

4. The method of any of the preceding claims, wherein said flat areas (52, 54) have a thickness of between 50 microns and 400 microns.

5. The method of any of the preceding claims, wherein the single-dose capsules (46) project outwards from said first side (21).

6. The method of any of claims 1-4, wherein the single-dose capsules (46) project outwards from said second side (31).

7. The method of any of the preceding claims, comprising cutting the longitudinal flat areas (54) before cutting the transverse flat areas (52) of said water-soluble tape (44).

8. The method of any of the preceding claims, wherein providing said water-soluble tape (44) comprises:
- providing a forming surface (12) having a plurality of cavities (14), continuously movable in a machine direction (MD),
- feeding a first continuous water-soluble film (20) onto said forming surface (12) in a first position (24),
- retaining said first continuous water-soluble film (20) on said forming surface (12) while it moves in said machine direction (MD) and forming a plurality of recesses in said first continuous water-soluble film (20), while maintaining the first continuous water-soluble film (20) adherent to said cavities (14),
- dispensing metered quantities of compositions into said recesses,
- applying a second continuous water-soluble film (30) onto said first continuous water-soluble film (20) and connecting said first and second continuous water-soluble films (20, 22) together by water sealing around said recesses so as to enclose said metered quantities of compositions between said first and second continuous water-soluble films (20, 30).

9. The method of any of the preceding claims, comprising receiving and holding said single-dose capsules (46) of said water-soluble tape (44) within the respective seats (80) of said anvil (64).

10. The method of any one of the preceding claims, wherein each cut of the water-soluble tape (44) is carried out only one at a time of the knives (74).

## Patentansprüche

1. Verfahren zum Schneiden eines wasserlöslichen Bandes (44), das die folgenden Schritte umfasst:
- Bereitstellen eines Ambosses (64),
- Bereitstellen einer rotierenden Messerwalze (66), die mindestens ein Messer (74) umfasst, das eine Schneidkante (76) aufweist, die sich von der rotierenden Messerwalze (66) nach außen erstreckt,
- Bereitstellen eines wasserlöslichen Bandes (44), das flache Bereiche (52, 54) umfasst, die eine erste Seite (21) und eine zweite Seite (31) umfassen, und Einzeldosis-Kapseln (46), die innerhalb des wasserlöslichen Bandes (44) ausgebildet sind, wobei die Einzeldosis-Kapseln (46) durch die flachen Bereiche (52, 54) miteinander verbunden und voneinander getrennt sind,
- Vorschieben des wasserlöslichen Bandes (44) in einer Maschinenrichtung (MD) mit einer Geschwindigkeit (V1) zwischen dem Amboss (64) und der rotierenden Messerwalze (66), wobei die erste Seite (21) des wasserlöslichen Bandes (44) in Kontakt mit dem Amboss (64) ist,
- Schneiden des wasserlöslichen Bandes (44) mit dem mindestens einen Messer (74), während das wasserlösliche Band (44) zwischen dem Amboss (64) und der rotierenden Messerrolle (66) hindurchläuft, wobei die rotierende Messerwalze (66) während eines einzelnen Schneidzyklus mit mindestens einer ersten Umfangsgeschwindigkeit (V2') und einer zweiten Umfangsgeschwindigkeit (V2") rotiert,
wobei die zweite Umfangsgeschwindigkeit (V2") mindestens 15% schneller ist als die erste Umfangsgeschwindigkeit (V2'), und wobei die rotierende Messerwalze (66) mit der ersten Umfangsgeschwindigkeit (V2') rotiert, wenn ein Messer (74) das wasserlösliche Band (44) in einer Richtung quer zur Maschinenrichtung (MD) schneidet,
wobei das Verfahren **dadurch gekennzeichnet ist, dass** das Verhältnis zwischen der ersten Umfangsgeschwindigkeit (V2') und der Geschwindigkeit (V1) zwischen 1,1 und 1,25 liegt.

2. Verfahren nach Anspruch 1, wobei das Verhältnis zwischen der ersten Umfangsgeschwindigkeit (V2') und der Geschwindigkeit (V1) zwischen 1,1 und 1,12 liegt.

3. Verfahren nach Anspruch 1 oder Anspruch 2, wobei die rotierende Messerwalze (66) ein bis zehn Messer (74) umfasst.

4. Verfahren nach einem der vorstehenden Ansprüche, wobei die flachen Bereiche (52, 54) eine Dicke zwischen 50 Mikron und 400 Mikron aufweisen.

5. Verfahren nach einem der vorstehenden Ansprüche, wobei die Einzeldosis-Kapseln (46) von der ersten Seite (21) nach außen ragen.

6. Verfahren nach einem der Ansprüche 1 bis 4, wobei die Einzeldosis-Kapseln (46) von der zweiten Seite (31) nach außen ragen.

7. Verfahren nach einem der vorstehenden Ansprüche, umfassend das Schneiden der flachen Längsbereiche (54) vor dem Schneiden der flachen Querbereiche (52) des wasserlöslichen Bandes (44).

8. Verfahren nach einem der vorstehenden Ansprüche, wobei die Bereitstellung des wasserlöslichen Bandes (44) Folgendes umfasst:
- Bereitstellen einer Formfläche (12), die eine Vielzahl von Hohlräumen (14) aufweist, die kontinuierlich in einer Maschinenrichtung (MD) beweglich sind,
- Zuführen einer ersten kontinuierlichen wasserlöslichen Folie (20) auf die Formfläche (12) in einer ersten Position (24),
- Festhalten der ersten kontinuierlichen wasserlöslichen Folie (20) auf der Formfläche (12), während sie sich in der Maschinenrichtung (MD) bewegt, und Bilden einer Vielzahl von Vertiefungen in der ersten kontinuierlichen wasserlöslichen Folie (20), während die erste kontinuierliche wasserlösliche Folie (20) an den Hohlräumen (14) haften bleibt,
- Abgeben von abgemessenen Mengen von Zusammensetzungen in die Vertiefungen,
- Aufbringen einer zweiten kontinuierlichen wasserlöslichen Folie (30) auf die erste kontinuierliche wasserlösliche Folie (20) und Verbinden der ersten und der zweiten kontinuierlichen wasserlöslichen Folie (20, 22) miteinander durch Wasserabdichtung um die Vertiefungen herum, um die abgemessenen Mengen an Zusammensetzungen zwischen der ersten und der zweiten kontinuierlichen wasserlöslichen Folie (20, 30) einzuschließen.

9. Verfahren nach einem der vorstehenden Ansprüche, umfassend das Aufnehmen und Halten der Einzeldosis-Kapseln (46) des wasserlöslichen Bandes (44) innerhalb der jeweiligen Sitze (80) des Ambosses (64).

10. Verfahren nach einem der vorstehenden Ansprüche, wobei jeder Schnitt des wasserlöslichen Bandes (44) jeweils nur von einem der Messer (74) ausgeführt wird.

## Revendications

1. Procédé pour découper une bande (44) hydrosoluble comprenant les étapes de :
- fourniture d'une enclume (64),
- fourniture d'un rouleau (66) à couteau rotatif comprenant au moins un couteau (74) présentant un bord (76) de coupe s'étendant vers l'extérieur à partir dudit rouleau (66) à couteau rotatif,
- fourniture d'une bande (44) hydrosoluble comprenant des zones (52, 54) plates comprenant un premier côté (21) et un deuxième côté (31), et des capsules (46) monodoses formées à l'intérieur de la bande (44) hydrosoluble, dans lequel les gélules (46) monodoses sont reliées et séparées les unes des autres par les zones (52, 54) plates,
- avancement de ladite bande (44) hydrosoluble dans un sens machine (MD) à une vitesse (V1) entre ladite enclume (64) et ledit rouleau (66) à couteau rotatif avec ledit premier côté (21) de la bande (44) hydrosoluble en contact avec l'enclume (64),
- découpe de ladite bande (44) hydrosoluble avec ledit au moins un couteau (74) pendant que ladite bande (44) hydrosoluble passe entre ladite enclume (64) et ledit rouleau (66) à couteau rotatif, dans lequel, lors d'un seul cycle de découpe, le rouleau (66) à couteau rotatif tourne avec au moins une première vitesse (V2') périphérique et une deuxième vitesse (V2") périphérique, dans lequel la deuxième vitesse (V2") périphérique est au moins 15 % plus rapide que la première vitesse (V2') périphérique et dans lequel le rouleau (66) à couteau rotatif tourne à la première vitesse (V2') périphérique lorsqu'un couteau (74) découpe ladite bande (44) hydrosoluble dans une direction transversale au sens (MD) machine,
dans lequel ledit procédé est **caractérisé en ce que** le rapport entre la première vitesse (V2') périphérique et la vitesse (V1) est compris entre 1,1 et 1,25.

2. Procédé selon la revendication 1, dans lequel le rapport entre la première vitesse (V2') périphérique et la vitesse (V1) est compris entre 1,1 et 1,12.

3. Procédé selon la revendication 1 ou la revendication 2, dans lequel ledit rouleau (66) à couteau rotatif comprend de un à dix couteaux (74).

4. Procédé selon l'une quelconque des revendications précédentes, dans lequel lesdites zones (52, 54) plates ont une épaisseur comprise entre 50 microns et 400 microns.

5. Procédé selon l'une quelconque des revendications précédentes, dans lequel les gélules (46) monodoses font saillie vers l'extérieur à partir dudit premier côté (21).

6. Procédé selon l'une quelconque des revendications 1 à 4, dans lequel les gélules (46) monodoses font saillie vers l'extérieur à partir dudit deuxième côté (31).

7. Procédé selon l'une quelconque des revendications précédentes, comprenant la découpe des zones (54) plates longitudinales avant la découpe des zones (52) plates transversales de ladite bande (44) hydrosoluble.

8. Procédé selon l'une quelconque des revendications précédentes, dans lequel la fourniture de ladite bande (44) hydrosoluble comprend :
- la fourniture d'une surface (12) de formation présentant une pluralité de cavités (14), mobile en continu dans un sens (MD) machine,
- l'amenée d'un premier film (20) hydrosoluble continu sur ladite surface (12) de formation dans une première position (24),
- le maintien dudit premier film (20) hydrosoluble continu sur ladite surface (12) de formation pendant qu'elle se déplace dans ledit sens (MD) machine et la formation d'une pluralité d'évidements dans ledit premier film (20) hydrosoluble continu, tout en maintenant le premier film (20) hydrosoluble continu adhérent auxdites cavités (14),
- la distribution de quantités dosées de compositions dans lesdits évidements,
- l'application d'un deuxième film (30) hydrosoluble continu sur ledit premier film (20) hydrosoluble continu et la liaison desdits premier et deuxième films (20, 22) hydrosolubles continus entre eux par étanchéité à l'eau autour desdits évidements de manière à enfermer lesdites quantités dosées de compositions entre lesdits premier et deuxième films (20, 30) hydrosolubles continus.

9. Procédé selon l'une quelconque des revendications précédentes, comprenant la réception et le maintien desdites capsules (46) monodoses de ladite bande (44) hydrosoluble à l'intérieur des sièges (80) respectifs de ladite enclume (64).

10. Procédé selon l'une quelconque des revendications précédentes, dans lequel chaque coupe de la bande (44) hydrosoluble n'est effectuée qu'une seule à la fois des couteaux (74).
